# EUROPEAN PATENT SPECIFICATION

(11) **EP 2 265 806 B1**
(45) Date of publication and mention of the grant of the patent: **02.11.2011**
(21) Application number: 09733895.8
(22) Date of filing: 15.04.2009
(51) Int. Cl.: F02B 19/10, F02B 19/16, F02B 19/18

(54) **PRE-CHAMBER UNIT OF A COMBUSTION ENGINE**
VORKAMMEREINHEIT FÜR EINEN VERBRENNUNGSMOTOR
UNITÉ DE PRÉCHAMBRE D UN MOTEUR À COMBUSTION

(30) Priority: 25.04.2008 FI 20085374
(43) Date of publication of application: 29.12.2010
(73) Proprietor: Wärtsilä Finland Oy, 65380 Vaasa (FI)
(72) Inventor: RÖSGREN, Carl-Erik, FI-65480 Vikby (FI); LAIHO, Jani, FI-65300 Vaasa (FI)
(74) Representative: Gustafsson, Aulis Valdemar
(86) International application number: PCT/FI2009/050283
(87) International publication number: WO 2009/130376

(56) References cited:
- WO-A-92/02718
- DE-A1- 4 001 142
- DE-C1- 19 703 309
- US-A- 4 174 679

## Description

The invention relates to the pre-chamber unit of the cylinder of a combustion engine according to the preamble of Claim 1.

It is a known fact that the amount of nitrogen oxides generated in combustion engines can be reduced by increasing the ratio of air and fuel of the air-fuel mixture, i.e., by using a leaner fuel mixture. In lean mixture or Otto-cycle engines, ignition does not take place by itself, but auxiliary means, such as sparking plugs and/or so-called pilot fuel injection are needed to provide the ignition. To enhance the combustion and to protect the ignition means, some lean mixture engines employ a pre-chamber, which is connected to the actual combustion space of the cylinder. A richer fuel mixture is fed into the pre-chamber; it is ignited and conveyed to the combustion space, whereby the leaner fuel mixture in the combustion space ignites. The pre-chamber is used in lean mixture engines that use gas as fuel, in particular.

Generally, the pre-chambers are rotationally symmetrical. The actual pre-chamber, where the fuel is ignited, may vary as to its size, being spherical or elliptical, for example. The pre-chamber is connected to the main combustion space of the cylinder by a channel that ends in several orifices. The number, orientation and diameter of the orifices are optimized according to the respective situation, taking into account piston relieves, for example. Regardless of the relatively high compression ratio, a glow element or a sparking plug is generally used as an aid to ignition.

When using the pre-chamber, the high temperature inside the same may cause a problem, whereby traditional materials do not endure and, for example, hot corrosion may occur. In particular, the orifices are subjected to stress, when the combustion reaction proceeds from the pre-chamber to the combustion space through the orifices. In practice, several orifices are needed, so that the progress and the performance of the combustion reaction in the main combustion space of the cylinder are as advantageous as possible. Typically, the diameter of the said channel or nozzle chamber can be in the order of 10 mm, about 20 mm at the most, whereby there are generally six orifices with a typical diameter of about 3.5 mm. Consequently, the distance between the orifices in the nozzle chamber that is subjected to high-temperatures is small. As the chamber is narrow, it is difficult to machine the orifices; therefore, they are acute-angled. All of this easily causes problems with durability, whereby the parts must be replaced or new usable materials must be found.

An object of the invention is to provide a pre-chamber arrangement that can be used to improve the durability of the nozzle chamber and the orifices, in particular. Another object is to provide a gas supply from the pre-chamber to the main combustion space of the cylinder, which in terms of flow technology and the progress of the combustion reaction is advantageous, thus ensuring a good performance. A further object is to provide a solution, which in terms of manufacturing technology is advantageous.

The objects of the invention are mainly achieved by the method described in Claim 1 and more in detail in the other claims.

According to the invention, the nozzle chamber comprises a part that is enlarged at least at the position of the orifices, its diameter in the transversal direction of the nozzle chamber being larger than that of the part between the orifices and the pre-chamber. In this way, the distance between the orifices becomes longer, which is prone to improve the durability of the nozzle chamber and the part that comprises the orifices, also making it easier to machine the orifices on the inside.

A solution that is advantageous in terms of manufacture is obtained, if the diameter of the widest spot of the said enlarged part of the nozzle chamber is about 1.25 - 1.65 times larger than the said diameter of the part between the orifices and the pre-chamber.

In terms of flow technology, it is preferable to arrange the enlarged part of the nozzle chamber to smoothly expand towards the orifices. In practice, the enlarged part of the nozzle chamber is preferably shaped so as to comprise a truncated cone, which converges from the orifices towards the pre-chamber. In that case, the coning angle of the truncated cone is preferably less than 15 degrees, preferably about 10 degrees.

To avoid sharp angles and edges, which are disadvantageous to the durability, the edges of the orifices are rounded on the side of the nozzle chamber. This is easier to carry out due to the expanded shape of this part of the chamber and the increased distance between the orifices.

The expansion part preferably comprises over 50% of the total length of the nozzle chamber. This can contribute to ensuring smooth shapes of the nozzle chamber.

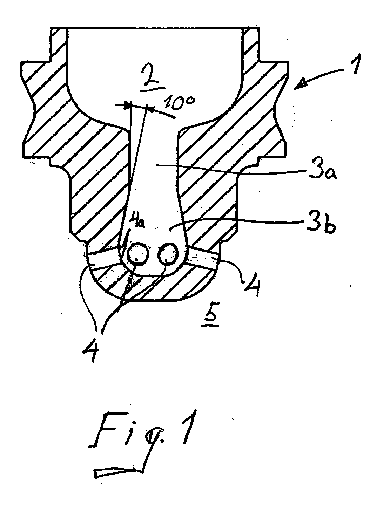

In the following, the invention is described by way of an example and with reference to the appended schematic drawing, its sole figure presenting the part of the pre-chamber unit that is shaped according to the invention and comprises the orifices.

In the figure, the reference number 1 refers to a pre-chamber unit, which comprises part of an actual pre-chamber 2 and to which a nozzle chamber 3 is connected, the nozzle chamber comprising a number of orifices 4 that open up to a main combustion space 5 of a cylinder. For clarity's sake, the cylinder, the cylinder head and the upper part of the pre-chamber unit are not shown herein in detail.

In practice, the pre-chamber unit 1 according to the figure can be implemented in different ways so that, e.g., the nozzle chamber 3 can be a separate component, as shown in the publication US 4426966, and WO 98/02718. Similarly, the entire supporting of the pre-chamber unit on the cylinder head can be implemented in various ways. The same applies to the upper part of the pre-chamber unit (not shown), i.e., the outermost part with respect to the main combustion space 5, wherein according to the respective solution, there are provided ignition means, such as pilot fuel injection means, glow element or sparking plug. These are not shown in detail herein, as the invention actually relates to the structure and shape of the nozzle chamber 3 and the invention can be applied irrespective of the selections and solutions associated with the said other structures.

Generally, the nozzle chamber 3 is an elongated and fairly narrow channel, at the one end of which the orifices 4 are located. According to the invention, the nozzle chamber 3 comprises a part 3a connected to the pre-chamber 2, and a part 3b that is enlarged or expanded compared to the part 3a and intended for the orifices 4. The part 3b is partly shaped as a truncated cone, whereby the coning angle is selected so as to be about 10 degrees, which is advantageous in view of manufacturing technique and the flows. The solution enables larger distances between the orifices 4. The inner edges 4a of the orifices are preferably rounded. All of this is prone to improve the durability and functioning of the structure.

The invention is not limited to the application described above, but various modifications are conceivable within the scope of the appended claims.

## Claims

1. A pre-chamber unit (1) of the cylinder of a combustion engine, comprising a pre-chamber (2) and an elongated nozzle chamber (3) connected thereto, a number of orifices (4) being provided at the one end of the nozzle chamber for connecting the pre-chamber to the main combustion space (5) of the cylinder and the nozzle chamber (3) further comprising a part (3b) that is enlarged at least next to the orifices (4) and its diameter in the transversal direction of the nozzle chamber (3) being larger than the diameter of the part (3a) between the orifices and the pre-chamber, **characterized in that** the enlarged part (3b) comprises over 50% of the total length of the nozzle chamber (3) and is shaped so as to comprise a truncated cone, which converges from the orifices (4) towards the pre-chamber (2), and that the coning angle of the truncated cone is smaller than 15 degrees, preferably about 10 degrees.

2. A pre-chamber unit according to Claim 1, **characterized in that** the diameter of the widest spot of the said enlarged part (3b) of the nozzle chamber (3) is about 1.25 - 1.65 times larger than the said diameter of the part (3a) between the orifices and the pre-chamber.

3. A pre-chamber unit according to Claim 1 or 2, **characterized in that** the enlarged part (3b) of the nozzle chamber is arranged so as to smoothly expand towards the orifices (4).

4. A pre-chamber unit according to any of the preceding claims, **characterized in that** the edges (4a) of the orifices are rounded on the side of the nozzle chamber (3).

## Patentansprüche

1. Vorkammereinheit (1) des Zylinders eines Verbrennungsmotors, die eine Vorkammer (2) und eine mit derselben verbundene längliche Düsenkammer (3) umfasst, wobei eine Anzahl von Öffnungen (4) an dem einen Ende der Düsenkammer bereitgestellt wird, um die Vorkammer mit dem Hauptbrennraum (5) des Zylinders zu verbinden, und die Düsenkammer (3) ferner einen Teil (3b) umfasst, der wenigstens unmittelbar neben den Öffnungen (4) vergrößert ist und dessen Durchmesser in der Querrichtung der Düsenkammer (3) größer ist als der Durchmesser des Teils (3a) zwischen den Öffnungen und der Vorkammer, **dadurch gekennzeichnet, dass** der vergrößerte Teil (3b) über 50 % der Gesamtlänge der Düsenkammer (3) umfasst und so geformt ist, dass er einen abgestumpften Kegel umfasst, der von den Öffnungen (4) zu der Vorkammer (2) hin zusammenläuft, und dass der Kegelwinkel des abgestumpften Kegels weniger als 15 Grad, vorzugsweise etwa 10 Grad, beträgt.

2. Vorkammereinheit nach Anspruch 1, **dadurch gekennzeichnet, dass** der Durchmesser des breitesten Punktes des vergrößerten Teils (3b) der Düsenkammer (3) etwa 1,25- bis 1,65-mal größer ist als der Durchmesser des Teils (3a) zwischen den Öffnungen und der Vorkammer.

3. Vorkammereinheit nach Anspruch 1 oder 2, **dadurch gekennzeichnet, dass** der vergrößerte Teil (3b) der Düsenkammer so angeordnet ist, dass er sich sanft zu den Öffnungen (4) hin erweitert.

4. Vorkammereinheit nach einem der vorhergehenden Ansprüche, **dadurch gekennzeichnet, dass** die Kanten (4a) der Öffnungen auf der Seite der Düsenkammer (3) abgerundet sind.

## Revendications

1. Unité de pré-chambre (1) du cylindre d'un moteur à combustion interne, comprenant une pré-chambre (2) et une chambre de buse allongée (3) raccordée à celle-ci, une pluralité d'orifices (4) étant prévus à une extrémité de la chambre de buse pour raccorder la pré-chambre à l'espace de combustion principal (5) du cylindre et la chambre de buse (3) comprenant en outre une partie (3b) qui est élargie au moins près des orifices (4) et son diamètre dans la direction transversale de la chambre de buse (3) étant plus grand que le diamètre de la partie (3a) entre les orifices et la pré-chambre, **caractérisée en ce que** la partie élargie (3b) comprend plus de 50% de la longueur totale de la chambre de buse (3) et est façonnée de manière à comprendre un cône tronqué, lequel converge à partir des orifices (4) vers la pré-chambre (2) et **en ce que** l'angle de conicité du cône tronqué est plus petit que 15 degrés, de préférence d'environ 10 degrés.

2. Unité de pré-chambre selon la revendication 1, **caractérisée en ce que** le diamètre du point le plus large de ladite partie élargie (3b) de la chambre de buse (3) est environ 1.25-1.65 fois plus grand que ledit diamètre de la partie (3a) entre les orifices et la pré-chambre.

3. Unité de pré-chambre selon la revendication 1 ou 2, **caractérisée en ce que** la partie élargie (3b) de la chambre de buse est agencée de manière à s'expanser légèrement dans la direction des orifices (4).

4. Unité de pré-chambre selon une quelconque des revendications précédentes, **caractérisée en ce que** les bords (4a) des orifices sont arrondis sur le côté de la chambre de buse (3).
